# EUROPEAN PATENT SPECIFICATION

(11) **EP 1 243 817 B1**
(45) Date of publication and mention of the grant of the patent: **27.10.2004**
(21) Application number: 01201087.2
(22) Date of filing: 23.03.2001
(51) Int. Cl.: F16H 61/00

(54) **Continuously variable transmission having an accurate pressure control system**
Stufenloses Getriebe mit einer genauen Druckregelvorrichtung
Transmission à variation continue à commande de pression précise

(43) Date of publication of application: 25.09.2002
(73) Proprietor: Van Doorne's Transmissie B.V., 5000 AM Tilburg (NL)
(72) Inventor: Van der Sluis, Francis Maria Antonius, 5271 HP Sint Michielsgestel (NL); Rienks, Maurice Didier, 5644 LJ Eindhoven (NL); Hessels, Johannes Louis Leonardus, 5652 AK Eindhoven (NL)

(56) References cited:
- WO-A-91/07613
- DE-A- 19 519 163
- US-A- 6 126 138

## Description

The present invention relates to a continuously variable transmission according to the preamble of claim 1. Such a transmission is known from DE-A-195 19 163. The known transmission comprises a first rotatable disc pair, at least one of the discs thereof being axially displaceable under the influence of a first pressure in a first medium chamber of a piston-cylinder assembly associated with the said first disc pair, a second rotatable disc pair, at least one of the discs thereof being axially displaceable under the influence of a second pressure in a second medium chamber of a piston-cylinder assembly associated with the said second disc pair, a drive belt running around said disc pairs at variable running radii defining a transmission ratio of the transmission, and a hydraulic control system coupled to the said medium chambers for influencing the hydraulic pressures therein.

The present invention further relates to the use of such a continuously variable transmission for performing a traction process in a vehicle or to a mechanical load process in an aeroplane or ship, in particular to a mechanical load process where an engine drives the said first disc pair at a variable rotational speed and a load is driven by the said second disc pair at an essentially constant rotational speed, wherein the load may be a constant frequency electrical generator.

The known control system is provided with a pressure valve for controlling the second pressure that prevails in a second hydraulic circuit comprising the said second medium chamber and to which second hydraulic circuit a pump is attached for supplying the control system with a flow of medium, i.e. the so called pump flow, and a flow valve for influencing the first pressure that prevails in a first hydraulic circuit comprising the said first medium chamber by allowing a flow of medium either from second hydraulic circuit to the first hydraulic circuit, or from the first hydraulic circuit to a medium sink or reservoir, or no flow at all. The pressure level of each of the first pressure and the second pressure in combination with an active surface area of the respective medium chamber determines a clamping force that is exerted by the respective disc pair on a part of the drive belt running between the discs thereof. These clamping forces allow a transfer of torque between a disc pair and the belt through friction and, moreover, influence the transmission ratio. Since this construction only allows the first pressure to become equal to or smaller than the second pressure, the active surface area of the first medium chamber is made larger than that of the second medium chamber so as to still allow the clamping force exerted by the first disc pair to become larger than that of the second disc pair. In known transmission designs the ratio between the said active surface areas to this end varies between about 1.8 and 2.5.

This pressure control system according to the known art has the disadvantage that its range of applications is limited. In particular it appeared in practice that an accurate adjustment of small amounts of medium flow from the second hydraulic circuit through the flow valve to the first hydraulic circuit, which are required during regularly occurring steady state transmission conditions wherein the transmission ratio is to be maintained constant, is hardly possible with the aid of the known control system at least with a desired degree of accuracy.

It is remarked that form the German patent application No. 195 19 163 there is known a control system provided with a hydraulic circuit having a alternative layout. The system is intended and suited for fail safe operation of the transmission, i.e. without using electronically controlled valves. In this system the second hydraulic circuit and the first hydraulic circuit are arranged in series with respect to the medium flow supplied into the second hydraulic circuit by a source thereof, such as e.g. the said pump, and wherein a first valve is situated between the said first and second hydraulic circuits, which valve is suited for and capable of affecting a flow of medium from the second circuit to the first circuit such that a flow dependent pressure difference may be effected between the said first and second pressures. In this control system a relatively large flow of medium passes through the first valve. In steady state transmission conditions the entire medium flow supplied into the second hydraulic circuit flows through the first valve and during a shifting of the transmission ratio the flow through the first valve will be somewhat elevated or decreased because of the accompanying change of the volume of the second medium chamber. It is noted that leakage of the medium in particular from the pressure chambers to the environment is considered negligible. A second valve suited for and capable of affecting a flow of medium from the first hydraulic circuit to the medium sink, whereby the first pressure is set. This control system provides only one medium sink connection, instead of two as in the previously discussed system. This reduces the flow of waist medium and in addition decreases the loss of energy, which energy is included in pressurised medium.

In this latter known system the first valve directly sets the pressure in the second medium chamber and the second valve directly sets the pressure in the first medium chamber. According to the invention, however, an improved controllability is advantageously realised in the continuously variable transmission that is characterised according to claim 1.

The transmission according to the present invention is provided with a control system, wherein the second valve, although directly affecting the first pressure, is in fact used to control the second pressure. Such pressure control may be performed using a known valve control system wherein a valve setting is influenced in dependence on a hydraulic or electronic signal that represents the difference between an actual, i.e. measured, pressure, and a desired pressure. Such a valve control system is well known and is e.g. described in EP-B-0.451.887. Preferably, the construction of the second valve conforms to that of the known pressure valve.

This pressure control arrangement wherein the pressure valve is located between the first hydraulic circuit and the medium sink has the advantage that when the second pressure changes, i.e. increases or decreases, the first pressure has the tendency to change accordingly. Thereby the ratio between said pressures advantageously changes only slightly, if at all, as does the transmission ratio, which varies in dependency on such pressure ratio. This has the significant advantage that when the pressure levels are changed, e.g. as a result of a change in the torque level to be transferred, no large adaptations of the control system and in particular of the first valve are required to maintain a constant transmission ratio. Such control behaviour is considered desirable, since this means that the mutual interaction of transmission ratio control and belt-disc friction control, which would complicate and destabilise the controllability thereof, is reduced improving the responsiveness of the system and yielding a stable and accurate transmission control.

Yet a further significant advantage of this latter pressure control system according to the invention is revealed when the transmission is at stand still, i.e. when the disc pairs are not rotating and may be understand as follows. In many known control systems only a single pressure sensor is adopted to save cost. This usually means that the second pressure is controlled by minimising the difference between a pressure level measured by means of the said pressure sensor and a desired pressure level, whereas the first pressure is controlled indirectly by allowing the first pressure to change in a direction that changes the actual transmission ratio towards a desired transmission ratio. Moreover, the first pressure level may be calculated from the measured transmission ratio and the second pressure level by using a mathematical model of the transmission such as the IDE-model, which is relatively well known in the art. However, at standstill of the transmission when the disc pairs and the belt are not rotating, the actual transmission ratio can usually not be determined and, moreover, the known mathematical models are invalid. It follows that in this situation the known control system will not be able to adequately control the first pressure, particularly because for the flow valve there is no fixed relation between a hydraulic or electronic control signal for influencing the setting of the flow valve and the level first pressure actually set. In these circumstances the first pressure may unwittingly become too low to prevent mutual slip of the belt and the first disc pair. This may disadvantageously result in a loss of transmission efficiency and wear of the drive belt. With the arrangement according to the invention this problem is overcome by the fact that the second pressure is measured by the said sensor, whereas the pressure valve, which is controlled based on this measured pressure, is situated between the first hydraulic circuit and the medium sink. This means that during standstill the level of both the second pressure and the first pressure are relatively accurately known. The second pressure is known, because it may be measured by means of the pressure sensor, whereas the first pressure may be accurately approximated or estimated, because the control characteristic of the pressure valve that sets this pressure shows a relatively accurate predetermined relation between a hydraulic or electronic control signal for influencing the setting of the pressure control valve and the level of the first pressure actually set by the said valve. So ultimately a speedy and reliable fine tuning of the transmission ratio and corresponding transmission parameters is now possible at standstill, whereby the first pressure is being controlled directly, namely by the pressure control valve. Accordingly, the invention also relates a control system incorporating a pressure sensor for determining the medium pressure prevailing in the second circuit and a pressure valve for controlling the first pressure having a control characteristic that shows a predetermined relation between a control signal for influencing the setting of the pressure valve and the level of the pressure actually set by the valve.

As a consequence of the aforementioned advantages application possibilities of the continuously variable transmission according to the invention have been extended, such that the system can now also be used effectively for Constant Speed Drive (CSD) applications. Such CSD applications occur when driving electrical generators, such as on board of air planes and are characterised by the feature that the speed of the generator and thus the transmission ratio is to be controlled within narrow constraints. Moreover, the control system maintains the advantage of the prior art control system, wherein the first pressure is equal to or lower than the second pressure, over other systems, such as are e.g. known from US-6.126.138, which advantage entails that only two separate valves are required and that these valves are of relatively simple and cheap design.

At present the continuously variable transmission and the use thereof will be elucidated further together with their additional advantages, while reference is being made to the appended drawing, wherein similar components are being referred to by means of the same reference numerals. In the drawing:
Figure 1 is a schematic representation of a driveline incorporating a continuously variable transmission;
Figure 2 is a side elevation of the continuously variable transmission as seen in cross section;
Figure 3 is a schematic representation of an electro-hydraulic control system for a continuously variable transmission according to the known art;
Figure 4 illustrates the relation between the transmission ratio and the ratio between the first and second pressure for the transmission according to the known art;
Figure 5 is a schematic representation of a control system in a first embodiment of the invention;
Figure 6 is a schematic representation of a control system in a second embodiment of the invention;
Figure 7 is a schematic representation of a control system in a third embodiment of the invention;
Figure 8 is an optimised version of the third embodiment of the invention according to figure 7.

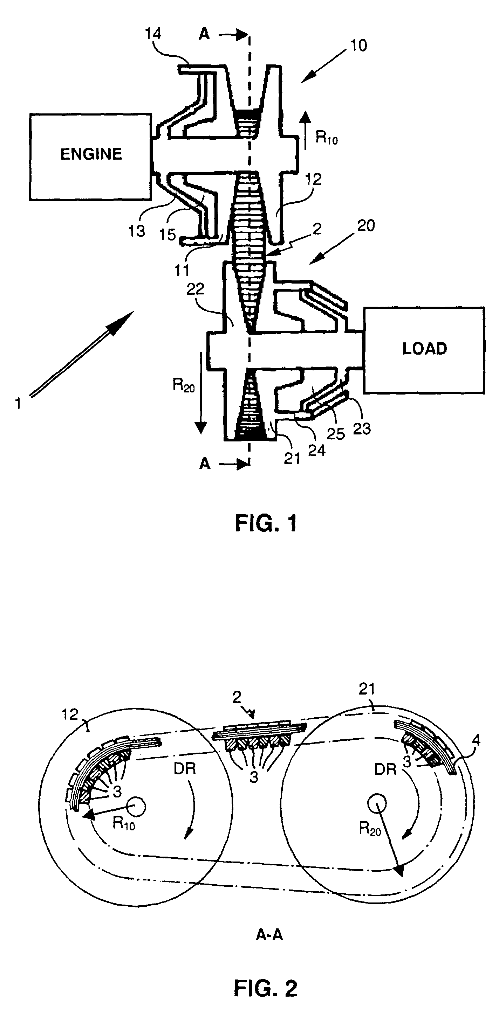

Figure 1 schematically shows a driveline, as e.g. used for vehicular propulsion or for driving an electrical generator, provided with an engine and a load, as well as a continuously variable transmission 1 provided there between. The transmission comprises a first rotatable disc pair 10, at least one disc 11 of the discs 11, 12 thereof being axially displaceable under the influence of a first pressure P₁ in a first medium chamber 15 defined by a piston-cylinder assembly 13, 14 associated with the said first disc pair 10, a second rotatable disc pair 20, at least one disc 21 of the discs 21, 22 thereof being axially displaceable under the influence of a second pressure P₂ in a second medium chamber 25 defined by a piston-cylinder assembly 23, 24 associated with the said second disc pair 20, and a drive belt 2 running around said first and second disc pairs 10 and 20 at a variable running radius R₁₀ and R₂₀ respectively, which radii R₁₀ and R₂₀ define a speed transmission ratio i of the transmission 1. In the transmission configuration shown in figure 1, the running radius R₁₀ of the drive belt 2 around the first disc pair 10 is smaller than the running radius R₂₀ around the second disc pair 20. In this configuration, when the engine drives the load, a torque T_{E} generated by the engine on the first disc pair 10 is increased by the transmission 1 when it is transferred to the load, whereas a rotational speed of engine N_{E} is decreased. Such transmission conditions where the running radius R₁₀ is smaller than the running radius R₂₀ are so-called decelerating conditions, whereas transmission conditions where the running radius R₁₀ is larger than the running radius R₂₀ are so-called accelerating conditions. By controlling the first pressure P₁ and the second pressure P₂, respective clamping forces, which are exerted by the respective disc pairs 10 and 20 on parts of the drive belt 2 running between the discs 11, 12; 21, 22 thereof, are set. To this end the transmission 1 is provided with a -pressure- control system that will be discussed later on. The clamping forces allow torque to be transferred between the disc pairs 10 and 20 and the belt 2 through friction and, moreover, their mutual force ratio determines the instantaneous transmission ratio i of the transmission 1, which may be varied between a most decelerating transmission ratio i_{D} and a most accelerating transmission ratio i_{A}.

Figure 2 shows a side elevation of the transmission 1 according to the cross section A-A indicated in figure 1. The drive belt 2 is shown to run at the smaller running radius R₁₀ on disc 12 of the first disc pair 10 and at the larger running radius R₂₀ on disc 21 of the second disc pair 20. The transmission 1 may be equipped with several types of drive belt such as a rubber belt or a chain. However, the drive belt 2 shown in figure 2 is a so-called push belt type drive belt 2, which is composed of a large number of plate-like transverse elements or blocks 3 that are provided freely movable along the circumference of an endless tensile means or carrier 4. This type of drive belt 2 is well known and is characterised by the feature that the engine torque T_{E} may be transferred between the disc pairs 10 and 20 by the blocks 3 pushing each other forward in a direction of rotation DR.

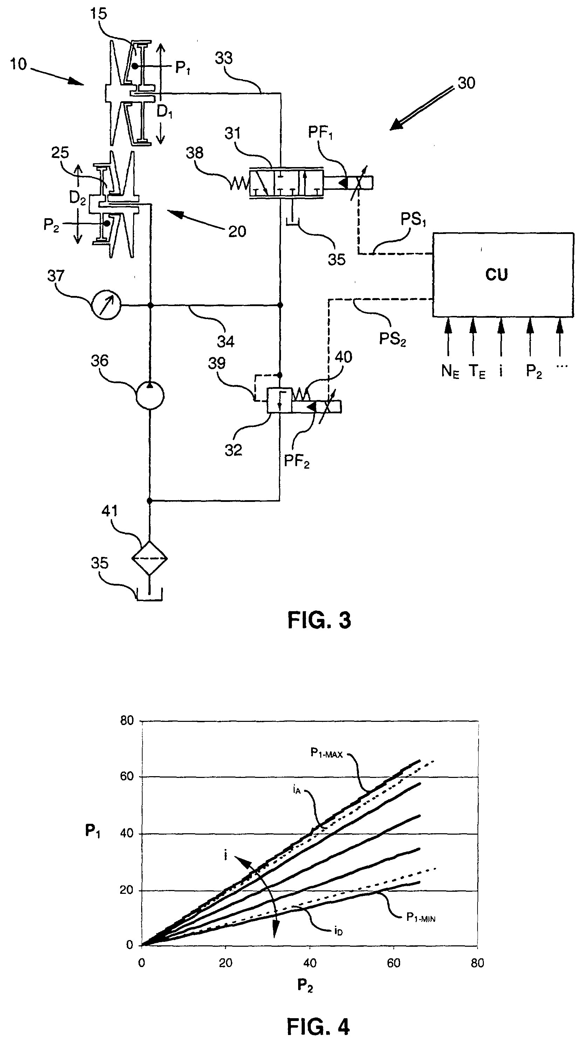

In figure 3 a pressure control system 30 for the known transmission 1 is schematically illustrated showing only the relevant parts thereof. The control system 30 according to the contemporary state of the art comprises an electronic part and a hydraulic part, whereby electromagnetically operable valves 31 and 32 form a transition between such parts. The hydraulic part of the control system 30 comprises hydraulic circuits 33 and 34 for containing and guiding a medium, which usually is a suitable synthetic oil, whereby a first hydraulic 33 circuit includes the first medium chamber 15 and a second hydraulic circuit 34 includes the second medium chamber 25. The control system is further provided with:
- a pressure valve 32 situated between the second hydraulic circuit 34 and a medium sink 35 for controlling the second pressure P₂ that prevails in the second hydraulic circuit 34 by allowing a smaller or larger flow of medium from the second hydraulic circuit 34 to the medium sink 35,
- a flow valve 31 situated between the second hydraulic circuit 34 and the first hydraulic circuit 33 for controlling the first pressure P₁ that prevails in the first hydraulic circuit 33 by allowing a smaller of larger flow of medium either from the second hydraulic 34 circuit to the first hydraulic circuit 33, or from the first hydraulic circuit 33 to a medium sink 35, and
- a pump 36 for generating a flow of medium, i.e. a so-called pump flow, from the medium sink 35 to the second circuit 34.
Since during operation of the transmission the pump flow passes through either one of the said valves 31, 32, they are said to be arranged in parallel with respect to the said flow.

The structure and functioning of hydraulic valves such as the pressure valve 32 and flow valve 31 are generally known in the art, however, it is summarised here that the known valve types usually comprise a valve body axially movably provided in a valve housing, whereby the relative (axial) position of the valve body within said housing determines a cross sectional surface area available for a medium flow through the valve between two of possibly several hydraulic channels connected to the valve. Such position is denoted as the valve setting. The said relative position of the valve body may be varied by varying at least one of several forces that usually act on at least two axially oriented end faces the valve body located on opposite ends thereof determining its position and/or movement within the valve housing, which at least one force is denoted here as the pilot force PF. The pilot force PF may, for instance, be realised mechanically by a so-called solenoid in dependency on an electric pilot signal PS. It is also known in the art to adopt a solenoid operated valve for converting the said pilot signal PS into a hydraulic pilot pressure that acts on an axially oriented end face of the valve body thus realising the pilot force PF that is dependent on the level of the pilot pressure and the specific surface area of the end face on which it acts.

In figure 3 it is indicated that the electronic part of the control system 30 comprises a control unit CU, which unit is used for determining -an electronic representation of- desired levels of the first pressure P₁ and of the second pressure P₂ based on any number and origin of input signals usually including at least the rotational speed of the engine N_{E}, the engine torque T_{E}, the transmission ratio i and the second pressure P₂, the latter being measured by means of a pressure sensor 37 associated with the second hydraulic circuit 34. The control unit CU also converts these desired pressure levels P₁ and P₂ into respective pilot signals PS₁ and PS₂ so as to effect valve settings of the flow valve 31 and the pressure valve 32 appropriate for realising these desired pressures P₁ and P₂. The valve setting of the flow valve 31 is determined by a balance between a force effected by a spring 38 and a first pilot force PF₁ realised in dependency on a first pilot signal PS₁, whereas the valve setting of the pressure valve 32 is determined by a balance between on the one hand a force effected by the second pressure P₂ by means of a pressure feedback duct 39 and on the other hand a force effected by a spring 40 and a second pilot force PF₂ realised in dependency on a second pilot signal PS₂. The pressure level of each of the said first pressure P₁ and the said second pressure P₂ in combination with an active surface area of the respective medium chamber 15; 25 determines the clamping force that is exerted by the respective disc pair 10 or 20 on the drive belt 2. These clamping forces allow a transfer of torque between the drive belt 2 and the disc pairs 10; 20 through friction and, moreover, influence the transmission ratio i. Because the known construction only allows the first pressure P₁ to become equal to or smaller than the second pressure P₂, an active surface area of the first medium chamber 15 is made larger than that of the second medium chamber 25 to allow the clamping force exerted by the first disc pair 10 to become larger than that of the second disc pair 20. This is realised by the larger diameter D₁ of the medium chamber 15 of the first disc pair 10 compared to the diameter D₂ of the medium chamber 25 of the second disc pair 20 as indicated in figure 3. Finally, with reference numeral 41 it is indicated in figure 3 that the known control system 30 usually is provided with a medium cooler and filter.

In figure 4 the effect of the level of the first pressure P₁ and the second pressure P₂ on the transmission ratio i are illustrated as a graph. In this example the second pressure P₂ may be controlled up to a level of 65 bar in dependency on the amount of torque that is to be transferred between the drive belt 2 and the second disc pair 20. The characteristics of the control system 30 including the relative size of the said active surface areas are chosen such that for any given level of the second pressure P₂, the first pressure P₁ may be varied between a level P_{1-MIN} realising the most decelerating transmission ratio i_{D} and a level P_{1-MAX} realising the most accelerating transmission ratio i_{A} of the transmission 1.

The known transmission 1 and more in particular the known flow valve 31 has the disadvantage that it is not particularly suited for accurate adjustment of small medium flows that regularly occur during operation of the transmission 1. Such accurate adjustments are, however, highly desirable for achieving optimum transmission efficiency and for optimising operational reliability. Another disadvantage of the known transmission is that there is no immediate relation between the first pilot signal PS₁ and the first pressure P₁ that is actually set. For example, when the first pilot signal PS₁ corresponds to a valve setting where the flow valve 31 is closed, i.e. allowing no medium flow at all, the first pressure P₁ may have, or obtain through medium leakage, any value between the level of the second pressure P₂ and a pressure prevailing in the medium sink 35, which usually is equal to the atmospheric pressure of about 1 bar. Particular at standstill, or shortly thereafter during acceleration of the load, the clamping force at the first disc pair 10 may unwittingly become too low for adequate torque transfer between the drive belt 2 and the discs 11 and 12 of the first disc pair 10, which disadvantageously results in slip of the drive belt 2 between the said discs 11 and 12 causing a loss of transmission efficiency and additional wear.

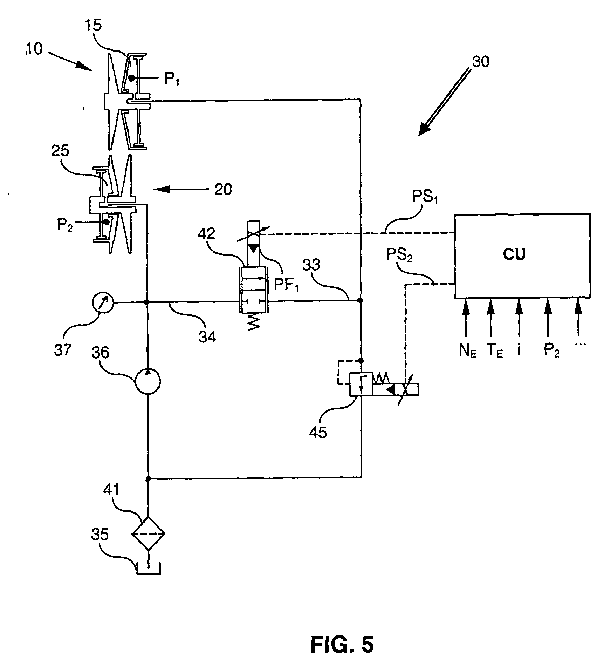

, The invention, as is illustrated in figures 5 to 8, provides for a continuously variable transmission 1 having an improved control system 30 that is characterised by the features that the first hydraulic circuit 33, the second hydraulic circuit 34 and the pump 36 are hydraulically arranged in series and that there is provided a first valve 42; 43; 44 connecting the said hydraulic circuits 33 and 34, which first valve 42; 43; 44 is capable of realising a variable pressure difference between the first pressure P₁ and the second pressure P₂ prevailing in the said first and second circuits 33 and 34 respectively, e.g. by varying a cross sectional surface area available for a flow of medium between the said hydraulic circuits 33 and 34. The transmission 1 according to the invention has the advantage that a relatively large flow of medium passes through the first valve 42; 43; 44, which has an advantageous effect on the accuracy with which the control system may operate. In steady state transmission conditions the entire flow supplied to the second hydraulic circuit 34 advantageously flows through the first valve 42; 43; 44.

In a first embodiment of the invention, which is schematically shown in figure 5, the first valve 42; 43; 44 comprises a variable restrictor type valve 42. Such a variable restrictor type valve 42 is capable of restricting, alternatively denoted impeding, the medium flow between the said circuits 33 and 34 to a variable extend by setting an opening of a given surface area between the said circuits 33 and 34 in dependency on the level or magnitude of the first pilot signal PS₁. Hereby a variable pressure difference may be effected across the valve. Preferably, the said variable extend may be continuously varied from virtually no flow being allowed at all to a virtually unimpeded flow in which latter case the first pressure P₁ and the second pressure P₂ are virtually equal. The control system 30 is further provided with a second valve 45 situated between the first hydraulic circuit 33 and a medium sink 35 for influencing the first pressure P₁ by allowing a smaller or larger flow of medium from the first hydraulic circuit 33 to the medium sink 35. Preferably, the second valve 45 conforms to the known pressure control type valve 32. The variable flow restrictor type valve 42 has the particular advantage that it is of relatively simple construction and accordingly may be implemented relatively cheaply.

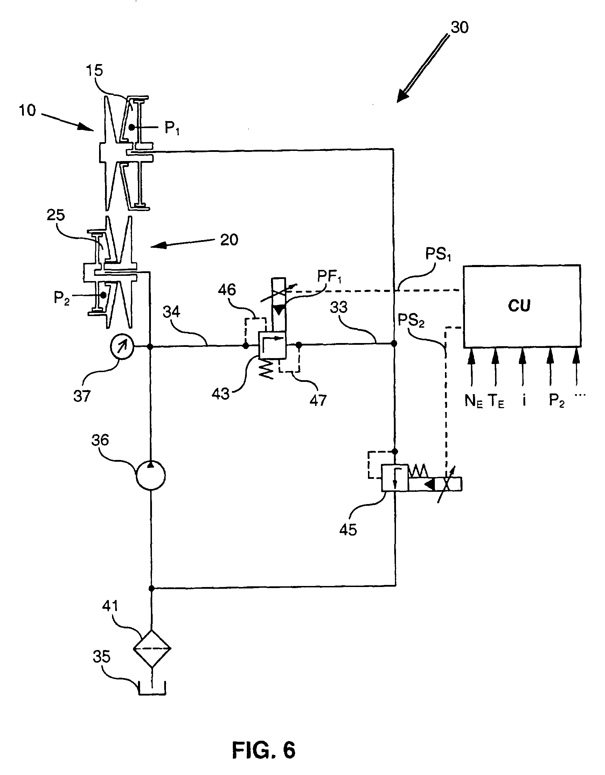

In a second embodiment of the invention that is schematically shown in figure 6 the first valve 42; 43; 44 comprises a variable pressure differential type valve 43. The valve setting of this type of valve is not only determined by the level or magnitude of first pilot signal PS₁, but also by the level of the first pressure P₁ and the level of the second pressure P₂. Preferably, the latter influences are realised by providing ducts, e.g. as indicated in figure 6 as the dotted lines 46 and 47 respectively, for allowing the said pressures P₁ and P₂ to act on opposite end faces of the valve body of the differential control type valve 43. Thereby, the influence of each of the pressures P₁ and P₂ is preferably such that changes in that respective pressure P₁; P₂ are counteracted. This arrangement has the advantage that, when the second pressure P₂ changes, e.g. increases in accordance with an increase in engine torque T_{E} that is to be transferred by the transmission 1, the first pressure P₁ has the tendency to change accordingly, whereby the pressure ratio between said pressures P₁ and P₂ advantageously changes only slightly if at all, resulting in a stable transmission ratio i. Moreover, by selecting suitable surface areas of the said end faces of the said valve body on which the pressures P₁ and P₂ act, it may be realised that for a given magnitude of the first pilot signal PS₁ and the accompanying transmission ratio i, the said pressure ratio and thus also the transmission ratio i remains virtually constant. Preferably this transmission ratio i corresponds to the most decelerating transmission condition i_{D}, because in this condition the transmission 1 is usually the most highly loaded and, moreover, this arrangement advantageously ensures that in all other transmission conditions an increase in the second pressure P₂ results in an increase in the first pressure P₁ and vice versa. The latter behaviour conforms to a generally preferred transmission behaviour, whereby the transmission ratio i becomes more decelerating when the engine torque T_{E} increases and vice versa. The differential pressure type valve and its particular advantages, albeit in combination with a conventional control system, are extensively described in the unpublished European patent application 00204670.4.

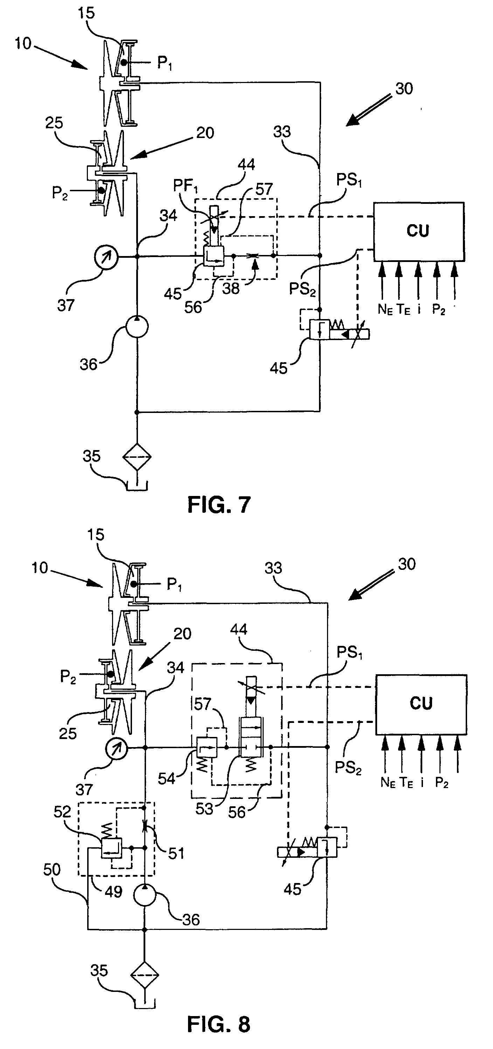

In a third embodiment of the invention that is schematically shown in figure 7 the first valve 42; 43; 44 comprises a variable flow control type valve 44. The valve setting of this type of valve 44 is not only determined in dependency on the first pilot signal PS₁, but also in dependency on the amount of said flow of medium from the second circuit 34 to the first circuit 33. In the figure 7 it is shown that this may be realised by allowing a flow dependent pressure drop over a restrictor 48 positioned in the first hydraulic circuit 33 immediately after a variable pressure differential type valve 55, whereby the valve setting of variable pressure differential type valve 55 is influenced by the said pressure drop. Preferably, the latter is realised by providing ducts, e.g. as is also indicated in figure 7 by the dotted lines 56 and 57 respectively, allowing the pressures prevailing on either side of the restrictor 48 to act on an opposite end face of the valve body of the pressure differential type valve 55. The restrictor 48 is a well-known hydraulic component and is usually present as a narrowing in, or of, a hydraulic channel or duct. Hereby, the influence of the said pressures drop is such that changes in the amount of medium flow through the variable flow control type valve 44 are counteracted. According to the invention this arrangement has the particular advantage that when the setting of the second valve 45 is changed, for example such that the first pressure P₁ increases, the variable flow control type valve 44 adjust itself so as to maintain a constant flow between the hydraulic circuits 33 and 34, thereby automatically effecting an increase in the second pressure P₂. Figure 4 illustrates that when the said pressures P₁ and P₂ change more or less correspondingly, the transmission ratio i will change only slightly, if at all, yielding a relatively simple and advantageously independent control of the transmission ratio i and of the engine torque T_{E} transferable by the transmission 1 without mutual notional slip of the belt 2 and the disc pairs 10 and 20.

For optimising the above mentioned advantageous control behaviour, the invention suggests two further improvements to the third embodiment of the invention that are illustrated in figure 8. According to a first improvement the pump flow should be as constant as possible to realise an optimum stability of the control system. Hereby it is prevented that -a change in- the pump flow would additionally and disadvantageously influence the valve setting of the variable flow control type valve 44, that is, independent from changes in the setting of the second valve 45. However, this is not normally the case since the pump flow will usually depend on the pressure gradient over the pump 36 and accordingly on the first pressure P₁ as well as on other parameters. Moreover, it is remarked that the same engine that drives the transmission 1 and the load often also drives the pump 36. Accordingly, the medium flow generated by the pump 36 depends on the engine speed N_{E} and thus will vary during operation of the transmission 1. The invention provides a solution to this problem in the addition of a third valve 49 that realises a fixed amount of medium flow from the pump 36 into the second hydraulic circuit 34 by branching-off into a further hydraulic circuit 50 of an mount of flow that is generated by the pump 36 in excess a the said fixed amount. According to the invention, such third valve 49 may comprise a restrictor 51, which is constituted by a narrowing in a hydraulic channel or duct carrying the pump flow into the second circuit 34 and which realises a pump flow dependent pressure drop, and a pressure control valve 52 situated between the second circuit 34 and the further hydraulic circuit 50, which is operable under the influence of the said pressure drop in such a manner that medium flow is increasingly branched-off when the said pressure drop increases and vice versa. According to the invention, for a reliable transmission operation, the pump 36 is dimensioned such that it can provide an amount of flow equal to or slightly larger than the said constant amount of flow under all circumstances during normal operation. When the pump 36 is directly driven by the same engine that drives the load, this means that the pump 36 is preferably dimensioned such that it is capable of delivering the said constant amount of flow at the lowest engine speed N_{E} that occurs during normal operation, e.g. idle engine speed in automotive applications. The branched-off flow need not be fed directly into the reservoir 35, but may be advantageously used for other typical functions of the control system 30 such as lubrication or clutch control.

It is noted that, since the medium flow through the control system 30 and the pressures P₁; P₂ prevailing therein mutually influence each other, the responsiveness and control behaviour of in fact every embodiment of the control system 30 according to the invention may be improved considerably by incorporating the above-mentioned third valve 49. However, the effects thereof are considered the most desirable in combination with the third embodiment of the invention.

According to the invention the control behaviour of the third embodiment of the invention may be further optimised by a second improvement that entails constructing the variable flow control type valve 44 as two sub-valves 53 and 54, which feature is also illustrated in figure 8. A first sub-valve 53 is a variable restrictor type valve similar to the valve 42 used in the first embodiment of the invention and the second sub-valve 54 is a pressure differential type valve similar to the valve 43 used in the second embodiment of the invention. Both valves 53 and 54 are arranged such that the variable pressure drop existing over the first sub-valve 53 determines the valve setting of the first sub-valve 54 by providing ducts 56 and 57, one on either side of the variable restrictor type valve 53. The said ducts 56 and 57 allow the locally prevailing pressure to act on opposite end faces of the valve body of the second sub-valve 54. The second sub-valve 54 actually determines the flow between the first and second hydraulic circuits 33 and 34 respectively. This construction combines some of the particular advantages of the first and second embodiments of the invention and, moreover, allows valves of relative simple construction to be used. A particular advantage of this construction is that the valve that is actively controlled, i.e. variable restrictor type first sub-valve 53, disturbs the pressures and flows prevailing in the control system only slightly, whereas the real work of controlling the first pressure P₁ by determining the flow between the first circuit 33 and the second circuit 34 is performed by another valve, i.e. the pressure differential type second sub-valve 54. Such separation of functions can significantly improve the stability of the control behaviour of the system 30.

In yet a further development of the invention, applicable to any embodiment of the invention, the second pilot signal PS₂ of the second valve 45, which for this purpose preferably is of the known pressure valve type, is determined by the CU based on the difference between an actual, i.e. measured second pressure P₂, and a desired pressure P₂ determined by the control unit CU. Rather surprisingly, the pressure sensor 37 is, according to the invention, thus associated with the second circuit 34 although the second valve 45 is situated between the first circuit 33 and the medium sink 35. Accordingly, the second valve 45 influences the second pressure P₂ only indirectly because of the presence of the first valve 42; 43; 44 situated between the second valve 45 and the second hydraulic circuit 34. This unconventional arrangement has the unexpected advantage that, even when using only a single pressure sensor 37, at standstill both said pressures P₁ and P₂ are relatively accurately known, because the second pressure P₂ may be measured by means of the pressure sensor 37, whereas the first pressure P₁ may be estimated using a predetermined characteristic of the pressure valve type second valve 45, which characteristic provides an approximation of the pressure set by the second valve 45, being the first pressure P₁, in dependency on the level or magnitude of the second pilot signal PS₂ and may be determined with sufficient accuracy. Thereby, the said slip of the drive belt 2 during standstill or initial acceleration may be prevented adequately and reliably.

Whilst the above has been described with reference to essentially preferred embodiments and best possible modes it will be understood that these embodiments are by no means to be construed as limiting examples of the transmissions 1 and control systems 30 concerned, because various modifications, features and combination of features falling within the scope of the appended claims are now within reach of the skilled person.

## Claims

1. Continuously variable transmission (1) comprising a first rotatable disc pair (10), at least one (11) of the discs (11, 12) thereof being axially displaceable under the influence of a first pressure (P₁) in a first medium chamber (15) of a piston-cylinder assembly (13, 14) associated with the said first disc pair (10), a second rotatable disc pair (20), at least one (21) of the discs (21, 22) thereof being axially displaceable under the influence of a second pressure (P₂) in a second medium chamber (25) of a piston-cylinder assembly (23, 24) associated with the said second disc pair (20) and a pressure control system (30) comprising a first hydraulic circuit (33) including the said first medium chamber (15), a second hydraulic circuit (34) including the said second medium chamber (25), a source (36) for supplying a medium flow into the second hydraulic circuit (34) and a first hydraulic valve (42; 43; 44) situated between the said hydraulic circuits (33 and 34), whereby the second hydraulic circuit (34) and the first hydraulic circuit (33) are arranged in series with respect to the said medium flow, whereby the first valve (42; 43; 44) is capable of affecting a flow of medium from the second hydraulic circuit (34) to the first hydraulic circuit (33) such that a pressure difference may be effected between the second pressure (P₂) and the first pressure (P₁) and whereby the control system (30) is further provided with a second valve (45) capable of affecting a flow of medium from the first hydraulic circuit (33) to a medium sink (35) such that a first pressure (P₁) is set, **characterised in that**, the second valve (45) is controlled in dependency on a desired second pressure and an actually measured second pressure (P₂) such that a difference there between is minimised.

2. Continuously variable transmission according to claim 1, **characterised in that** the second valve (45) is a pressure control type valve having a predetermined control characteristic between a pressure valve control signal (PS₂) and the pressure (P₁) set by the valve.

3. Continuously variable transmission according to claim 1 or 2, **characterised in that** the first valve (42; 43; 44) comprises a variable restrictor type valve (42), which valve (42) is capable of controlling the cross sectional surface area of an opening available for the said flow of medium from the second hydraulic circuit (34) to the first hydraulic circuit (33) in dependency on a first pilot signal (PS₁)

4. Continuously variable transmission according to claim 1 or 2, **characterised in that** the first valve (42; 43; 44) is a variable pressure differential type valve (43) by means of which the said pressure difference may be influenced in dependency on all three of a first pilot signal (PS₁), the first pressure (P₁) and the second pressure (P₂).

5. Continuously variable transmission according to claim 1 or 2, **characterised in that** the first valve (42; 43; 44) comprises a variable flow control type valve (44) by means of which the said pressure difference may be influenced in dependency on a first pilot signal (PS₁) and on the amount of said flow of medium through the valve (44).

6. Continuously variable transmission according to claim 5, **characterised in that** the variable flow control type valve (44) is composed of a restrictor (48) for realising a flow dependent pressure drop in the said flow of medium from the second hydraulic circuit (34) to the first hydraulic circuit (33) and a pressure differential type valve (55) operable under the influence of the said pressure drop and a first pilot signal (PS₁).

7. Continuously variable transmission according to claim 5, **characterised in that** the variable flow control type valve (44) is composed of a variable restrictor type valve (53) for realising a flow dependent pressure drop in the said flow of medium from the second hydraulic circuit (34) to the first hydraulic circuit (33) in dependency on a first pilot signal (PS₁) and a pressure differential type valve (54) operable under the influence of the said pressure drop.

8. Continuously variable transmission according to any one of the preceding claims, **characterised in that** the control system (30) is further provided with a third valve (49; 51, 52) for making the said medium flow into the second hydraulic circuit (34) constant by branching-off into a further hydraulic circuit (50) of any excess amount of flow generated by the said source (36).

9. Use of the continuously variable transmission according to any one of the preceding claims for performing a traction process in a vehicle or to a mechanical load process in an aeroplane or ship, preferably for performing a mechanical load process wherein an engine drives the said first disc pair 10 at a variable rotational speed N_{E} and a load is driven by the said second disc pair 20 at an essentially constant rotational speed.

## Patentansprüche

1. Kontinuierlich variable Übertragung (1), die ein erstes drehbares Scheibenpaar (10), wobei mindestens eine (11) der Scheiben (11, 12) davon unter dem Einfluß eines ersten Drucks (P₁) in einer ersten Medienkammer (15) einer Kolben/Zylinder-Einheit (13, 14), die dem ersten Scheibenpaar (10) zugeordnet ist, axial verschiebbar ist, ein zweites drehbares Scheibenpaar (20), wobei mindestens eine (21) der Scheiben (21, 22) davon unter dem Einfluß eines zweiten Drucks (P₂) in einer zweiten Medienkammer (25) einer Kolben/Zylinder-Einheit (23, 24), die dem zweiten Scheibenpaar (20) zugeordnet ist, axial verschiebbar ist, sowie ein Drucksteuerungssystem (30) umfaßt, das einen ersten Hydraulikkreis (33) mit der ersten Medienkammer (15), einen zweiten Hydraulikkreis (34) mit der zweiten Medienkammer (25), eine Quelle (36) zur Zuführung eines Medienstroms in den zweiten Hydraulikkreis (34) und ein zwischen den Hydraulikkreisen (33 und 34) befindliches erstes Hydraulikventil (42; 43; 44) umfaßt, wobei der zweite Hydraulikkreis (34) und der erste Hydraulikkreis (33) im Verhältnis zum Medienstrom in Reihe vorgesehen sind, wobei das erste Ventil (42; 43; 44) einen Medienstrom vom zweiten Hydraulikkreis (34) zum ersten Hydraulikkreis (33) so beeinflussen kann, daß eine Druckdifferenz zwischen dem zweiten Druck (P₂) und dem ersten Druck (P₁) bewirkt werden kann, und wobei das Steuerungssystem (30) weiterhin mit einem zweiten Ventil (45) ausgestattet ist, das einen Medienstrom vom ersten Hydraulikkreis (33) zu einem Medienbecken (35) so beeinflussen kann, daß ein erster Druck (P₁) eingestellt wird, **dadurch gekennzeichnet, daß** das zweite Ventil (45) in Abhängigkeit von einem gewünschten zweiten Druck und einem tatsächlich gemessenen zweiten Druck (P₂) so gesteuert wird, daß eine dazwischen vorhandene Differenz minimiert wird.

2. Kontinuierlich variable Übertragung nach Anspruch 1, **dadurch gekennzeichnet, daß** das zweite Ventil (45) ein Drucksteuerungsventil mit einer vorbestimmten Steuerungscharakteristik zwischen einem Druckventilsteuerungssignal (PS₂) und dem vom Ventil eingestellten Druck (P₁) ist.

3. Kontinuierlich variable Übertragung nach Anspruch 1 oder 2, **dadurch gekennzeichnet, daß** das erste Ventil (42; 43; 44) ein variables Drosselventil (42) umfaßt, wobei das Ventil (42) die Querschnittsfläche einer Öffnung, die für den Medienstrom vom zweiten Hydraulikkreis (34) zum ersten Hydraulikkreis (33) zur Verfügung steht, in Abhängigkeit von einem ersten Pilotsignal (PS₁) steuern kann.

4. Kontinuierlich variable Übertragung nach Anspruch 1 oder 2, **dadurch gekennzeichnet, daß** das erste Ventil (42; 43; 44) ein variables Druckdifferenzventil (43) ist, mit dem die Druckdifferenz in Abhängigkeit von allen dreien eines ersten Pilotsignals (PS₁), des ersten Drucks (P₁) und des zweiten Drucks (P₂) beeinflußt werden kann.

5. Kontinuierlich variable Übertragung nach Anspruch 1 oder 2, **dadurch gekennzeichnet, daß** das erste Ventil (42; 43; 44) ein variables Strömungssteuerungsventil (44) umfaßt, mit dem die Druckdifferenz in Abhängigkeit von einem ersten Pilotsignal (PS₁) und von der Menge des Medienstroms durch das Ventil (44) beeinflußt werden kann.

6. Kontinuierlich variable Übertragung nach Anspruch 5, **dadurch gekennzeichnet, daß** das variable Strömungssteuerungsventil (44) aus einer Drossel (48) zur Realisierung einer strömungsabhängigen Druckminderung im Medienstrom vom zweiten Hydraulikkreis (34) zum ersten Hydraulikkreis (33) sowie aus einem unter dem Einfluß der Druckminderung und eines ersten Pilotsignals (PS₁) betätigbaren Druckdifferenzventil (55) besteht.

7. Kontinuierlich variable Übertragung nach Anspruch 5, **dadurch gekennzeichnet, daß** das variable Strömungssteuerungsventil (44) aus einem variablen Drosselventil (53) zur Realisierung einer strömungsabhängigen Druckminderung im Medienstrom vom zweiten Hydraulikkreis (34) zum ersten Hydraulikkreis (33) in Abhängigkeit von einem ersten Pilotsignal (PS₁) sowie aus einem unter dem Einfluß der Druckminderung betätigbaren Druckdifferenzventil (54) besteht.

8. Kontinuierlich variable Übertragung nach einem der vorstehend aufgeführten Ansprüche, **dadurch gekennzeichnet, daß** das Steuerungssystem (30) weiterhin mit einem dritten Ventil (49; 51; 52) ausgestattet ist, um den Medienstrom in den zweiten Hydraulikkreis (34) dadurch konstant zu halten, daß eine beliebige Überschußmenge des von der Quelle (36) erzeugten Stroms in einen weiteren Hydraulikkreis (50) abgezweigt wird.

9. Verwendung der kontinuierlich variablen Übertragung nach einem der vorstehend aufgeführten Ansprüche zur Durchführung eines Traktionsverfahrens in einem Fahrzeug oder eines mechanischen Lastverfahrens in einem Flugzeug oder Schiff, vorzugsweise zur Durchführung eines mechanischen Lastverfahrens, bei dem eine Maschine das erste Scheibenpaar 10 mit einer variablen Drehzahl N_{E} antreibt und eine Last durch das zweite Scheibenpaar 20 mit einer im wesentlichen konstanten Drehzahl angetrieben wird.

## Revendications

1. Transmission à variation continue (1) comprenant une première paire de disques rotatifs (10), au moins un (11) des disques (11, 12) de celle-ci pouvant être déplacé axialement sous l'influence d'une première pression (P₁) dans une première chambre de fluide (15) d'un ensemble de piston - cylindre (13, 14) associé à ladite première paire de disques (10), une deuxième paire de disques rotatifs (20), au moins un (21) des disques (21, 22) de celle-ci pouvant être déplacé axialement sous l'influence d'une deuxième pression (P₂) dans une deuxième chambre de fluide (25) d'un ensemble de piston - cylindre (23, 24) associé à ladite deuxième paire de disques (20), et un système de commande de pression (30) comprenant un premier circuit hydraulique (33) comprenant ladite première chambre de fluide (15), un deuxième circuit hydraulique (34) comprenant ladite deuxième chambre de fluide (25), une source (36) pour fournir un écoulement de fluide dans le deuxième circuit hydraulique (34) et une première soupape hydraulique (42; 43; 44) située entre lesdits circuits hydrauliques (33 et 34), dans laquelle le deuxième circuit hydraulique (34) et le premier circuit hydraulique (33) sont arrangés en série par rapport audit écoulement de fluide, dans laquelle la première soupape (42; 43; 44) est capable d'affecter un écoulement de fluide en provenance du deuxième circuit hydraulique (34) au premier circuit hydraulique (33), de telle sorte qu'une différence de pression puisse être créée entre la deuxième pression (P₂) et la première pression (P₁), et dans laquelle le système de commande (30) est en outre équipé d'une deuxième soupape (45) capable d'affecter un écoulement de fluide en provenance du premier circuit hydraulique (33) à un carter de fluide (35), de telle sorte qu'une première pression (P₁) soit réglée, **caractérisée en ce que** la deuxième soupape (45) est commandée en fonction d'une deuxième pression souhaitée et d'une deuxième pression réellement mesurée (P₂), de telle sorte qu'une différence entre celles-ci soit minimisée.

2. Transmission à variation continue selon la revendication 1, **caractérisée en ce que** la deuxième soupape (45) est une soupape du type à commande de pression présentant une caractéristique de commande prédéterminée entre un signal de commande de soupape de pression (PS₂) et la pression (P₁) réglée par la soupape.

3. Transmission à variation continue selon la revendication 1 ou 2, **caractérisée en ce que** la première soupape (42; 43; 44) comprend une soupape du type à étranglement variable (42), ladite soupape (42) étant capable de commander l'aire de surface de la section transversale d'une ouverture disponible pour ledit écoulement de fluide du deuxième circuit hydraulique (34) vers le premier circuit hydraulique (33) en fonction d'un premier signal pilote (PS₁).

4. Transmission à variation continue selon la revendication 1 ou 2, **caractérisée en ce que** la première soupape (42; 43; 44) est une soupape du type à différentiel de pression variable (43) au moyen de laquelle ladite différence de pression peut être influencée à la fois en fonction d'un premier signal pilote (PS₁), de la première pression (P₁) et de la deuxième pression (P₂).

5. Transmission à variation continue selon la revendication 1 ou 2, **caractérisée en ce que** la première soupape (42; 43; 44) comprend une soupape du type à commande d'écoulement variable (44) au moyen de laquelle ladite différence de pression peut être influencée en fonction d'un premier signal pilote (PS₁) et de l'importance dudit écoulement de fluide à travers la soupape (44).

6. Transmission à variation continue selon la revendication 5, **caractérisée en ce que** la soupape du type à commande d'écoulement variable (44) est composée d'un étrangleur (48) pour réaliser une chute de pression dépendant de l'écoulement dans ledit écoulement de fluide du deuxième circuit hydraulique (34) vers le premier circuit hydraulique (33), et d'une soupape du type à différentiel de pression (55) fonctionnant sous l'influence de ladite chute de pression et d'un premier signal pilote (PS₁).

7. Transmission à variation continue selon la revendication 5, **caractérisée en ce que** la soupape du type à commande d'écoulement variable (44) est composée d'une soupape du type à étrangleur variable (53) pour réaliser une chute de pression dépendant de l'écoulement dans ledit écoulement de fluide du deuxième circuit hydraulique (34) vers le premier circuit hydraulique (33) en fonction d'un premier signal pilote (PS₁), et d'une soupape du type à différentiel de pression (54) fonctionnant sous l'influence de ladite chute de pression.

8. Transmission à variation continue selon l'une quelconque des revendications précédentes, **caractérisée en ce que** le système de commande (30) est en outre équipé d'une troisième soupape (49; 51, 52) pour rendre constant ledit écoulement de fluide dans le deuxième circuit hydraulique (34) en dérivant dans un circuit hydraulique supplémentaire (50) toute quantité d'écoulement excédentaire générée par ladite source (36).

9. Utilisation de la transmission à variation continue selon l'une quelconque des revendications précédentes pour exécuter un procédé de traction dans un véhicule ou un procédé de charge mécanique dans un avion ou un bateau, de préférence pour exécuter un procédé de charge mécanique dans lequel un moteur entraîne ladite première paire de disques 10 à une vitesse de rotation variable N_{E}, et dans lequel une charge est entraînée par ladite deuxième paire de disques 20 à une vitesse de rotation essentiellement constante.
